Europäisches Patentamt

European Patent Office

Office européen des brevets

(11) Veröffentlichungsnummer: **0 002 657**
**B1**

## (12) EUROPÄISCHE PATENTSCHRIFT

(21) Anmeldenummer: **78100954.3**

(22) Anmeldetag: **22.09.78**

(51) Int. Cl.³: **A 47 C 7/54, B 60 N 1/06**

(54) Armlehne

(30) Priorität: **22.12.77 DE 2757288**

(43) Veröffentlichungstag der Anmeldung:
**11.07.79 Patentblatt 79/14**

(45) Bekanntmachung des Hinweises auf die Patenterteilung:
**26.11.80 Patentblatt 80/24**

(84) Benannte Vertragsstaaten:
**BE FR GB NL SE**

(56) Entgegenhaltungen:
**DE - A - 2 507 848**
**FR - A - 2 196 580**
**US - A - 1 916 989**
**US - A - 4 022 502**

(73) Patentinhaber: **Gebr. Happich GmbH**
**Postfach 10 02 49 Clausenbrücke 1**
**D - 5600 Wuppertal 1 (DE)**

(72) Erfinder: **Janz, Joachim**
**Jägerhofstrasse 116 b**
**D - 5600 Wuppertal 1 (DE)**
**Solcher, Joachim**
**Oberste-Homberg 18**
**D - 5620 Velbert 15 (DE)**
**Schneider, Manfred**
**Stuttbergstrasse 26**
**D - 5600 Wuppertal 1 (DE)**

Armlehne

Die Erfindung betrifft eine Armlehne, die an Fahrzeugsitzen oder Sitzmöbeln anordbar ist und aus einem länglichen Armlehnenkörper mit einem diesen einendig abstützenden rohrförmigen Tragorgan und zumindest einem, den Armlehnenkörper gegen ein Abziehen vom Tragorgan sichernden Rastelement besteht, wobei der Armlehnenkörper aus einem inneren hohlen Trägerteil und einer äußeren, das Trägerteil ringsum einbettenden Polsterschicht aus Schaumkunststoff gebildet ist und das Trägerteil mit einer die Polsterschicht durchdringenden, einen im wesentlichen zylindrischen Öffnungsquerschnitt aufweisenden Aufnahmekammer zur Aufnahme des Tragorganes ausgebildet ist.

Eine bekannte Armlehne der gattungsgemäßen Art ist in der DE - A - 25 07 848 gezeigt und beschrieben. Diese Armlehne ist auf einer rohrförmigen Achse schwenkbar gelagert. Der Schwenkbereich der Armlehne wird durch eine fest mit der Achse verbundene Anschlagplatte, in der sich zwei Führungsschlitze befinden, die zur Führung von zwei Anschlagbolzen dienen, begrenzt. Die Anschlagbolzen dienen gleichzeitig dazu, die Armlehne gegen ein Abziehen von der Achse zu sichern. Aus diesem Grunde sind sie auf einer Seite fest im umpolsterten Grundkörper der Armlehne eingepreßt und durch je einen Sicherungsring axial gesichert. Die freien Enden der Anschlagbolzen weisen einen Bund auf, der zur axialen Sicherung mit einem außen an der Anschlagplatte anliegenden Anschlag ausgerüstet ist. Ferner sind die Anschlagbolzen als Verdrehsicherung mit einer Rändelung versehen. Die bekannte Armlehne besitzt insbesondere aufgrund ihrer schwenkbar gelagerten Anordnung, die aber oftmals gar nicht erwünscht ist, einen vielteiligen, ihre Herstellung verteuernden und ihre Montage wesentlich erschwerenden Aufbau.

Eine durch die US - A - 4 022 502 weiterhin bekannt gewordene Armlehne wird von zwei Stützen getragen. Die Stützen weisen an ihren Endbereichen jeweils eine Öffnung auf, in die federbelastete Rastelemente, die in dem Armlehnenkörper angeordnet sind, einrasten. Auf diese Weise ist die Armlehne gegen ein ungewolltes Abziehen von den Stützen gesichert. Die Rastelemente selber besitzen einen relativ aufwendigen Aufbau und sind in separaten Lagerkäfigen gelagert. Da zwei in Aufnahmeöffnungen des Armlehnenkörpers eindringende, im Abstand voneinander angeordnete Stützen vorgesehen sind, ist es nicht erforderlich, den Armlehnenkörper gegen ein Wegschwenken zu sichern, jedoch ist es oftmals nicht möglich oder zumindest nicht erwünscht, zwei Stützen für den Armlehnenkörper vorzusehen, so daß sich dann das Problem ergibt, den Armlehnenkörper gegen ein Wegschwenken zu sichern.

Der Erfindung liegt die Aufgabe zugrunde, eine Armlehne zu schaffen, die kostengünstig und einfach herzustellen ist, nur ein Tragorgan benötigt und an diesem schnell und einfach zu montieren und durch besonders einfache und kostengünstige Mittel sowohl in axialer als auch in radialer Richtung festlegbar ist.

Gemäß der Erfindung wird diese Aufgabe dadurch gelöst, daß als Rastelement ein Federring dient, der in eine in der Wandung der Aufnahmekammer und in eine in der Wandung des rohrförmigen Tragorganes vorgesehene Ringnut eingreift, daß die in dem Trägerteil angeordnete Aufnahmekammer, die nur zur Unterseite des Armlehnenkörpers hin offen ist, einen Boden besitzt, und daß der Boden sowie das Stirnende des Tragorganes formschlüssig ineinandergreifende Klauen aufweisen.

Die Maßnahme, als Rastelement einen Federring derart einzusetzen, daß er in sich gegenüberliegenden Ringnuten einrastet, ist zwar bei einer Rohrverbindung, wie sie in der US - A - 1 916 989 gezeigt ist, bekannt, jedoch stellt sich bei Rohrverbindungen nicht das Problem, das Anschlußteil gleichzeitig gegen ein Verdrehen zu sichern.

Während das innere Trägerteil bei der bekannten Armlehne nach der DE-A-25 07 848 einen mehrteiligen, durch die Anschlagbolzen zusammengehaltenen Aufbau besitzt, besteht eine zwecks Einsparung von Herstellungs- und Montagekosten vorgesehene Ausgestaltung der Erfindung darin, daß das Trägerteil zusammen mit der Aufnahmekammer als einstückiges Kunststoff-Spritzgußteil ausgebildet ist. Dabei kann vorteilhafterweise weiterhin vorgesehen sein, daß das Trägerteil aus zwei über ein Filmscharnier einstückig miteinander verbundenen Hälften besteht, die über das Filmscharnier aufeinanderklappbar und über angeformte Klipselemente aneinander festlegbar sind.

Bei der Herstellung der Armlehne kann das Umschäumen des Trägerteils dadurch vereinfacht werden, daß nach einem weiteren Merkmal der Erfindung der Boden der Aufnahmekammer eine bevorzugt langlochartige Öffnung aufweist.

Im folgenden wird der Gegenstand der Erfindung anhand eines auf der Zeichnung dargestellten Ausführungsbeispiels näher erläutert. Es. zeigen:

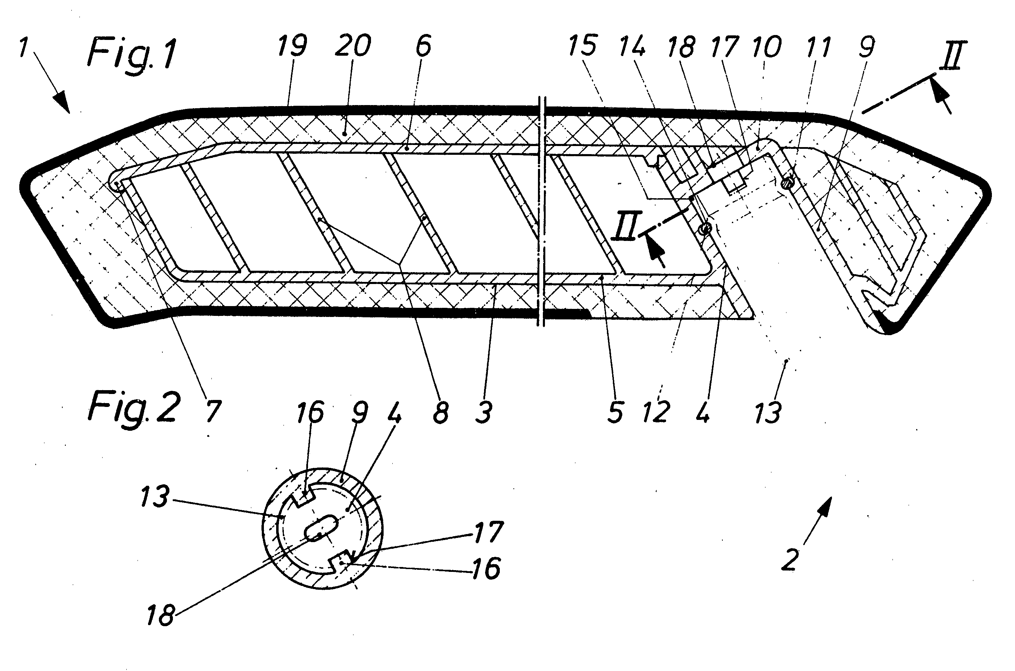

Fig. 1 einen vertikalen Längsschnitt durch eine Armlehne und

Fig. 2. einen Schnitt, gemäß der Linie II—II in Fig. 1.

Die Armlehne besteht aus einem Armlehnenkörper 1, der an seiner Unterseite an einem Endbereich durch ein Tragorgan 2 abgestützt ist.

Der Armlehnenkörper 1 besitzt ein hohles Trägerteil 3, das als einstückiger Kunststoff-Spritzgußkörper ausgebildet ist und eine einstückig angeformte Aufnahmekammer 4 für das Tragorgan 2 aufweist. Das Trägerteil 3 besteht im einzelnen aus einem kastenförmigen Unterteil 5 und einem damit über ein nicht dargestelltes Filmscharnier einstückig verbundenes, als Deckel 6 ausgebildetes Oberteil. Unterteil 5 und Deckel 6 sind über angeformte Klipselemente 7 aneinander festgelegt. Im Inneren des Trägerteils 3 sind Versteifungsrippen 8 angeformt.

Die Aufnahmekammer 4 besitzt eine zylindrische Querschnittsöffnung, welche durch eine zylindrische Wandung 9 gebildet wird und sie weist einen Boden 10 auf. Im Abstand vom Boden 10 ist auf der Innenseite der Wandung 9 eine radiale Ringnut 11 eingeformt, die ein als Federring 12 ausgebildetes Rastelement aufnimmt. Die Ringnut 11 ist dabei tiefer als der entspannte Federring 12, so daß dieser auseinandergespreizt werden kann, wenn das Tragorgan 2 in die Aufnahmekammer hineingleitet.

Das Tragorgan 2 besteht aus einem mit dem Sitz- oder Stuhlgestell verbundenen Rohrkörper 13, der kurz vor seinem freien Ende eine eingezogene Ringnut 14 aufweist. In diese Ringnut 14 rastet der Federring 12 nach dem Aufstecken des Armlehnenkörpers 1 auf den Rohrkörper ein. Der Aufsteckvorgang wird dabei durch eine stirnendige Anfasung 15 des Rohrkörpers 13 erleichtert. Nach dem Aufstecken sitzt der Armlehnenkörper 1 zufolge des Federringes 12 fest an dem Rohrkörper 13.

Ein Verdrehen des Armlehnenkörpers 1 um die Rohrkörperachse wird durch ineinandergreifende Klauen verhindert, die am Boden 10 angeformt und am Stirnende des Rohrkörpers 13 vorgesehen sind. Die Klauen sind dabei in einfacher Weise durch nockenförmige Ansätze 16 am Boden 10 und durch randoffene Schlitze 17 am stirnseitigen Ende des Rohrkörpers 13 gebildet. Beim Ausführungsbeispiel sind zwei sich diametral gegenüberliegende Ansätze 16 vorgesehen, die in die Schlitze 17 formschlüssig eingreifen.

Der Boden 10 weist eine langlochartige Öffnung 18 auf, so daß das Trägerteil 3 zum Zwecke des Umschäumens in einfacher Weise von einem Knebel aufgenommen werden kann.

Im dargestellten Ausführungsbeispiel ist das Trägerteil 3 in eine rotierte Haut 19 eingebracht und der Hohlraum zwischen dem Trägerteil 3 und der Haut 19 ist mit Kunststoffschaum 20 ausgeschäumt. Es ist aber auch möglich, das Trägerteil 3 mit Integralschaumstoff zu umschäumen, wobei sich eine geschlossene saubere Haut ergibt.

## Patentansprüche

1. Armlehne, die an Fahrzeugsitzen oder Sitzmöbeln anordbar ist und aus einem länglichen Armlehnenkörper (1) mit einem diesen einendig abstützenden rohrförmigen Tragorgan (2) und zumindest einem, den Armlehnenkörper (1) gegen ein Abziehen vom Tragorgan (2) sichernden Rastelement besteht, wobei der Armlehnenkörper (1) aus einem inneren hohlen Trägerteil (3) und einer äußeren, das Trägerteil (3) ringsum einbettenden Polsterschicht aus Schaumkunststoff (20) gebildet ist und das Trägerteil (3) mit einer die Polsterschicht (20) durchdringenden, einen im wesentlichen zylindrischen Öffnungsquerschnitt aufweisenden Aufnahmekammer (4) zur Aufnahme des Tragorganes (2) ausgebildet ist, dadurch gekennzeichnet, daß als Rastelement ein Federring (12) dient, der in eine in der Wandung (9) der Aufnahmekammer (4) und in eine in der Wandung des rohrförmigen Tragorganes (2) vorgesehene Ringnut (11 und 14) eingreift, daß die in dem Trägerteil (3) angeordnete Aufnahmekammer (4), die nur zur Unterseite des Armlehnenkörpers (1) hin offen ist, einen Boden (10) besitzt, und daß der Boden (10) sowie das Stirnende des Tragorganes (2) formschlüssig ineinandergreifende Klauen (Ansätze 16 und Schlitze 17) aufweisen.

2. Armlehne nach Patentanspruch 1, dadurch gekennzeichnet, daß das Trägerteil (3), zusammen mit der Aufnahmekammer (4), als einstückiges Kunststoff-Spritzgußteil ausgebildet ist.

3. Armlehne nach Patentanspruch 2, dadurch gekennzeichnet, daß das Trägerteil (3) aus zwei über ein Filmscharnier einstückig miteinander verbundenen Hälften (5 und 6) besteht, die über das Filmscharnier aufeinanderklappbar und über angeformte Klipselemente (7) aneinander festlegbar sind.

4. Armlehne nach einem oder mehreren der Patentansprüche 1 bis 3, dadurch gekennzeichnet, daß der Boden (10) der Aufnahmekammer (4) eine bevorzugt langlochartige Öffnung (18) aufweist.

## Revendications

1. Accoudoir pouvant être placé sur des sièges de véhicule ou des meubles-sièges et comprenant un corps allongé (1) comportant un organe de support tubulaire (2) le supportant à une extrémité et au moins un élément de verrouillage empêchant le corps de l'accoudoir (1) de quitter l'organe de support (2), un corps (1) se composant d'une partie de support intérieure (3) creuse et d'une couche de rembourrage extérieure (20) de mousse plastique enrobant la partie de support (3) de toutes parts et la partie de support (3) comportant une chambre de réception (4) destinée à recevoir l'organe de support (2), traversant la couche de rembourrage (20), présentant une section d'ouverture sensiblement cylindrique, caractérisé en ce que l'élément de verrouillage utilisé est une rondelle élastique (12) qui pénètre dans une rainure annulaire (11) pratiquée dans la paroi (9) de la chambre de réception (4) et dans une rainure

annulaire (14) pratiquée dans la paroi de l'organe de support tubulaire (2), en ce que la chambre de réception (4) se trouvant dans la partie de support (3), qui n'est ouverte que vers le bas du corps (1) de l'accoudoir, comporte un fond (10), et en ce que ce fond (10), ainsi que l'extrémité frontale de l'organe de support (2) comportent des griffes s'emboîtant par concordance de forme (appendices 16 et fentes 17).

2. Accoudoir selon la revendication 1, caractérisé en ce que la partie de support (3) est réalisée en une seule pièce plastique moulée par injection d'un seul tenant avec la chambre de réception (4).

3. Accoudoir selon la revendication 2, caractérisé en ce que la partie de support (3) se compose de deux moitiés (5 et 6) reliées entre elles d'un seul tenant par une charnière pelliculaire, qui peuvent être rabattues l'une sur l'autre grâce à la charnière pelliculaire et être fixées l'une à l'autre au moyen d'éléments d'attache (7) qui y sont formés.

4. Accoudoir selon l'une quelconque des revendications 1 à 3, caractérisé en ce que le fond (10) de la chambre de réception (4) comporte une ouverture (18) de préférence en forme de trou allongé.

## Claims

1. An armrest attachable to a vehicle seat or to a furniture-type of seat and comprising:
   a) an elongate body (1) including
   b) a tubular support (2) arranged to bear the body at one end portion thereof, and
   c) at least one arrester serving at least to inhibit the body (1) from being pulled off the support (2),
wherein the body (1) includes an internal hollow carrier (3) and an external layer of padding (20) consisting of a foamed synthetic plastics material and completely embedding the carrier (3), and wherein the carrier (3) is provided with a receptacle (4) penetrating the layer of padding (20), having a bore of substantially cylindrical cross-section and serving to receive the support (2), characterized in that the arrester is a resilient lock ring (12) which engages two annular grooves (11 and 14 respectively), one being provided in the wall (9) of the receptacle (4) and the other one in the tubular support (2), in that the receptacle (4) provided in the carrier (3) is open only at its end closest to the base of the body (1) and closed by a bottom (10) at its opposite end and in that the bottom (10) and the front end face of the support (2) are each provided with claws (projections 16 and slots 17 respectively) matchingly shaped so as to permit inter-engagement between them.

2. An armrest according to claim 1, characterized in that the carrier (3) including the receptacle (4) therein are an integral component injection-moulded from a synthetic plastics material.

3. An armrest according to claim 2, characterized in that the carrier (3) consists of two halves (5 and 6) integrally joined by a flexible thickness-reduced section functioning as a hinge, and in that the two halves are foldable by means of said flexible hinge one on top of the other and securable to one another in their folded position by integrally formed clips (7).

4. An armrest according to any one or more of the claims 1 to 3, characterized in that the bottom (10) of the receptacle (4) is provided with an aperture (18) which preferably is oblong.

Fig.1

Fig.2

0002657

1/1